Europäisches Patentamt

European Patent Office

Office européen des brevets

(19)

(11) Veröffentlichungsnummer: **0 264 483**
**B1**

(12) **EUROPÄISCHE PATENTSCHRIFT**

(45) Veröffentlichungstag der Patentschrift:
06.09.89

(51) Int. Cl.⁴: **B01D 11/02, A23F 5/20**

(21) Anmeldenummer: **86114741.1**

(22) Anmeldetag: **23.10.86**

(54) Verfahren zum Entcoffeinieren von Kaffee.

(43) Veröffentlichungstag der Anmeldung:
27.04.88 Patentblatt 88/17

(45) Bekanntmachung des Hinweises auf die Patenterteilung:
06.09.89 Patentblatt 89/36

(84) Benannte Vertragsstaaten:
AT BE CH DE ES FR GB IT LI NL

(56) Entgegenhaltungen:
DE-A- 3 133 032
FR-A- 2 140 098
FR-A- 2 360 261
US-A- 4 246 291

RECENT DEVELOPMENTS SEPARATION SCIENCE,
Band 3, Teil A, 1977, Seiten 171-193; C. IRANI et al.:
"Separations using supercritical gases"

(73) Patentinhaber: **Kaffee-Veredelungs-Werk Koffeinfrei Kaffee G.m.b.H. & Co., Werner Siemens Strasse 80-84, D-2000 Hamburg 74(DE)**

(72) Erfinder: **Brunner, Gerd, Prof. Dr.-Ing., Wallersbacher Weg 10, D-8542 Roth 3(DE)**
Erfinder: **Menthe, Jürgen, Bernhard-Ihnen-Strasse 2a, D-2057 Reinbek(DE)**

(74) Vertreter: **von Raffay, Vincenz, Dipl.-Ing. et al, Patentanwälte Raffay, Fleck & Partner Postfach 32 32 17, D-2000 Hamburg 13(DE)**

**Beschreibung**

Die vorliegende Erfindung betrifft ein Verfahren zum Entcoffeinieren von Kaffee nach dem Oberbegriff des Anspruchs 1.

Ein derartiges Verfahren ist aus der DE-A 3 133 032 bekannt.

Es ist ferner anerkannt, daß die in der Rohkaffeebohne enthaltenen Säuren einen wichtigen Beitrag zum Gesamtaroma des Kaffees leisten, was in O. Eichler, Kaffee und Coffein, 2. Auflage, Springer Verlag beschrieben wird.

Der Säurecharakter einer Kaffeesorte stellt ein Wertmerkmal für die sensorische Beurteilung dar. Die höchsten Preise auf dem Weltmarkt erzielen Provenienzen mit einer guten, feinen Säure. Als Einzelsorten geröstet sind diese jedoch für den Konsumenten zu sauer. Erst ihre wohldosierte Zugabe zu anderen Kaffeesorten ergibt eine Kaffeemischung, welche die Spitzenqualitäten des Handels auszeichnet.

Die sensorisch wahrnehmbare Säure des Kaffees, die hier als Geschmackssäure bezeichnet werden soll, ist außer von der Provenienz und der Aufbereitung auch vom Alter des Rohkaffees und vom Röstgrad abhängig. Es wurde gefunden, daß sie sich durch Messung des pH-Wertes erfassen läßt (Werner u. Kohley, 1965).

Der pH-Wert von Kaffeegetränken sollte nach Sivetz (1972) bei einer Aufgußstärke von 42,5 g gemahlenem Kaffee mittlerer Röstung pro 1000 g Wasser zwischen 4,90 und 5,20 liegen. Bei niedrigerem pH-Wert, also höherem Säuregrad, ist der Kaffee zu sauer; bei höherem pH-Wert schmeckt er flach und bitter.

Die Robusta-Arten haben weniger Geschmackssäure als die Arabicas, wie aus Tabelle 9 ersichtlich ist (HADORN u. BEETSCHEN, 1973; SIVETZ, 1972). Der pH-Wert der Arabicas liegt zwischen 4,85 und 5,15, der der Robustas zwischen 5,25 und 5,40. Einen auffallend hohen Wert hat mit 5,75 der geschmacklich weniger zusagende indonesische Robusta. Hochgewachsene Arabicas (Kenya) haben einen niedrigeren pH-Wert als die unterhalb 1000 m angepflanzten Sorten (brasilianischer Santos).

Die Aufbereitung des Rohkaffees spielt ebenfalls eine Rolle. Naß aufbereitete, sogenannte gewaschene Kaffees, haben mehr Geschmackssäure als die nicht gewaschenen, trocken aufbereiteten Sorten.

Einen großen Einfluß auf die Säure des Kaffees hat auch der Röstgrad. Man mißt ihn bekanntlich an Hand des Einbrands, d.h. des Gewichtsverlustes während des Röstprozesses. Bei Beginn der Röstung liegt der pH-Wert bei 5,8, durchläuft mit 15 % Einbrand ein Minimum von 5,0 und steigt bei dunkler Röstung mit 20 % Einbrand wieder auf etwa 5,4 an (WERNER u. KOHLEY, 1965).

Erfahrene Sensoriker, wie z. B. die Kaffeeverkoster in Kaffeehandelsunternehmen, können zwei Röstkaffeesorten noch unterscheiden, wenn die pH-Werte nur 0,025 auseinander liegen (SIVETZ, 1972).

Obwohl die flüchtigen und nichtflüchtigen Säuren des Röstkaffees qualitativ und quantitativ bekannt sind, ist es noch nicht gelungen, eine Beziehung zwischen diesen und dem pH-Wert als Maß für die Geschmackssäure herzustellen. Der pH-Wert kennzeichnet die Wasserstoffionen-Aktivität des Kaffeeaufgusses und stellt kein Äquivalent für die Gesamtsäuremenge dar, da die im Kaffee enthaltenen, schwachen Säuren unterschiedlich stark dissoziiert sind. Feldman et al. (1969) nehmen an, daß die nichtflüchtigen, aliphatischen Säuren und die Chlorogensäuren einen wesentlichen Beitrag zur Geschmackssäure des Kaffeegetränks liefern.

Da nach dem oben Gesagten der pH-Wert und die Geschmackssäure des Röstkaffees parallel verlaufen, sind Kaffeeanpreisungen, wie "säurearm" nachprüfbar.

Nach alledem dürfte es einleuchten, daß es erstrebenswert ist, schon beim Entcoffeinieren den Säurecharakter zu beeinflussen und zu steuern, ohne daß ein zu hoher Säuregrad bzw. niedriger pH-Wert dadurch hervorgerufen wird. Dieses ist die Aufgabe der vorliegenden Erfindung, die erfindungsgemäß dadurch gelöst wird, daß man Rohkaffee mit 1–50 Gew.-% $CO_2$ und 99–50 Gew.-% $N_2O$ als Extraktionsgemisch entcoffeiniert.

Dieses Ergebnis ist in verschiedener Hinsicht als besonders überraschend zu werten, da bei Einsatz von reinem $CO_2$ (100 Gew.-%) als Extraktionsmittel der Säurecharakter nicht sensorisch wahrnehmbar ist. Das gleiche gilt auch für den Fall, daß nur mit $N_2O$ (100 Gew.-%) gearbeitet wird. Erst bei Verwendung des erfindungsgemäßen Gemisches macht sich deutlich sensorisch bemerkbar, daß ein steigender Anteil an $CO_2$ den sauren Geschmackseindruck verstärkt.

Eine Mischung aus gleichen Teilen $CO_2$ und $N_2O$ hat sich als besonders gut wirkendes Extraktionsmittel mit einer feinen sauren Geschmacksnote erwiesen, wobei gleichzeitig die Aufnahmefähigkeit für Coffein am höchsten ist.

Im folgenden wird eine ausführliche Versuchsbeschreibung für das erfindungsgemäße Entcoffeinierungsverfahren gegeben:

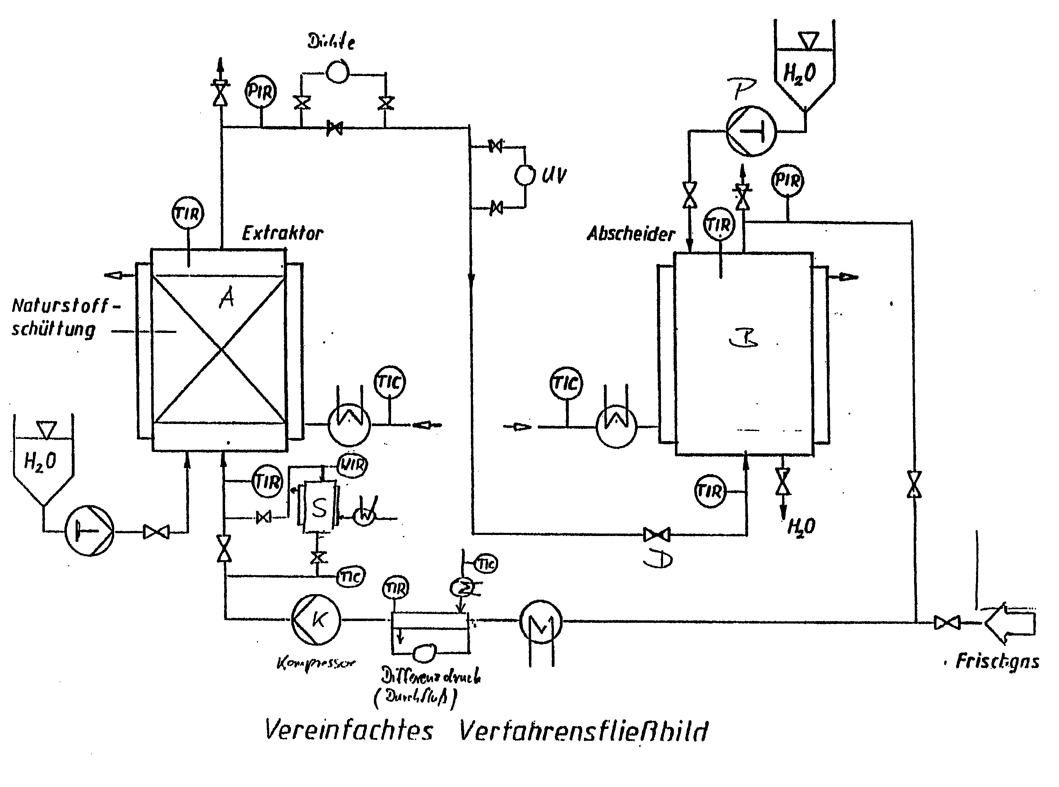

400 g Rohkaffee werden mit 40 - 160 g Wasser intensiv vermischt, bis das Wasser vollkommen von den Kaffeebohnen aufgenommen ist. Die so angefeuchtete Rohkaffeemenge wird als Feststoffschüttung in den Druckbehälter A (Extraktor), der in Abb. 1 schematisch dargestellten Versuchsapparatur eingebracht. Der Druckbehälter wird verschlossen und mittels des Kompressors K durch das Extraktionsgas auf den Extraktionsdruck von 20 MPa gebracht. Als Extraktionsgas wird eine überkritische Mischung aus 30 Vol.% $CO_2$ mit 70 Vol% $N_2O$ verwendet, die aus dem Gasvorrat G gepumpt wird und nach Sättigung mit Wasser durch Durchströmen des Sättigungsbehälters S in den Extraktionsbehälter geführt wird. Als überkritische Mischung wird ein Zustand der Mischung verstanden, der hinsichtlich des Druckes höher liegt als der kritische Druck der Mischung (höher als etwa 8 MPa) und hinsichtlich der Temperatur höher liegt als die kritische Temperatur der Mischung (höher als etwa 35° C).

Nach Erreichen des Extraktionsdrucks wird der Gasumlauf am Drosselventil D geöffnet. Das Extraktionsgas strömt nunmehr vom Kompressor über den Sättiger und im Extraktor durch die Schüttung roher Kaffeebohnen, aus denen selektiv das Koffein extrahiert wird. Nach Beladung mit Koffein verläßt das Extraktionsgas den Extraktionsdruckbehälter. An dem Drosselventil wird der Druck auf etwa die Hälfte des Extraktionsdrucks, ca. 10 MPa, gedrosselt. Nach der Druckerniedrigung strömt das Gas von unten in den Abscheidebehälter B. Von oben wird mittels der Pumpe P auf 60 ° C erwärmtes koffeinfreies Wasser in den auf 60 ° C erwärmten Abscheider B gepumpt, und auf eine Füllkörperschüttung gesprüht. Im Gegenstrom wird mittels des Wassers das Koffein aus dem Extraktionsgas gewaschen. Das mit Koffein beladene Wasser wird unten am Abscheider abgezogen. Das koffeinfreie Gas verläßt den Abscheider am oberen Ende und wird über den Kompressor wieder dem Extraktor zugeführt. Der Gaskreislauf wird über ca. l0 h aufrechterhalten. Dabei wird ein Verhältnis von Extraktionsgas zu eingesetzter Kaffeemenge von etwa 35 l/h aufrechterhalten.

Nach Versuchsende wird der Gaskreislauf unterbrochen und der Extraktor auf Umgebungsdruck entspannt. Die Kaffeebohnen werden in einem Umlufttrockner in etwa l,5 h auf die Ausgangsfeuchte getrocknet.

Nach diesem Verfahren wurden die nachfolgend angegebenen Gemische entcoffeiniert und sensorisch getestet, deren Ergebnisse in der nachfolgenden Tabelle dargestellt sind.

| Vers.- Nr. | Extraktionsgas Vol%Co2/Vol% N2O | Sensorische Beurteilung |
|---|---|---|
| 1 | 0/100 | flach, Geschmack unverändert |
| 2 | 25/75 | (*) Orig. breit, neutral, keine Säure |
| 3 | 50/50 | Orig., schon säurehaltig |
| 4 | 75/25 | Orig., ältl., deutlich säurehaltig |
| 5 | 99/1 | Orig., ältl., deutlich säurehaltig |

(*) Orig. = entspricht der Tasse des original unbearbeiteten Kaffees (breit)

In der einzigen Figur wird ein schematisches Fließschema des erfindungsgemäßen Verfahrens gezeigt, aus dem alle Einzelheiten hervorgehen.

## Patentansprüche

1. Verfahren zum Entcoffeinieren von Kaffee, bei dem man als Extraktionsmittel ein überkritisches Gemisch von $N_2O$ und $CO_2$ einsetzt, dadurch gekennzeichnet, daß man Rohkaffee mit 1–50 Gew.-% $CO_2$ und 99–50 Gew.-% $N_2O$ als Extraktionsgemisch entcoffeiniert.

2. Verfahren nach Anspruch 1, dadurch gekennzeichnet, daß man ein Extraktionsgemisch mit höherem $CO_2$- bzw. niedrigerem $N_2O$-Anteil verwendet, um den sauren Geschmackseindruck zu verstärken.

3. Verfahren zum Entcoffeinieren von Kaffee nach Anspruch 1, dadurch gekennzeichnet, daß man ein Gemisch von 50 Gew.-% $CO_2$ und 50 Gew.-% $N_2O$ einsetzt.

## Claims

1. Process for the decaffeination of coffee in which the extractant used is a supercritical mixture of $N_2O$ and $CO_2$, characterized in that raw coffee is decaffeinated with 1 to 50% by weight of $CO_2$ and 99 to 50% by weight of $N_2O$ as the extraction mixture.

2. Process according to claim 1, characterized in that an extraction mixture with a higher amount of $CO_2$ and a lower amount of $N_2O$ is used, for obtaining a predetermined intensity of acid taste.

3. Process for the decaffeination of coffee according to claim 1, characterized in that a mixture comprising 50% weight of $CO_2$ and 50% by weight of $N_2O$ is used.

## Revendications

1. Procédé de décaféination de café dans lequel on utilise comme agent d'extraction, un mélange surcritique de $N_2O$ et de $CO_2$, caractérisé en ce que l'on décaféine du café brut avec 1 à 50% en poids de $CO_2$ et 99 à 50% en poids de $N_2O$ en tant que mélange d'extraction.

2. Procédé selon la revendication 1, caractérisé en ce que l'on utilise un mélange d'extraction comportant une plus importante proportion de $CO_2$ et une plus faible proportion de $N_2O$, afin de renforcer l'impression d'acidité.

3. Procédé de décaféination de café selon la revendication 1, caractérisé en ce que l'on utilise un mélange de 50% en poids de $CO_2$ et de 50% en poids de $N_2O$.

Frischgas

$H_2O$

Abscheider

$H_2O$

UV

Dichte

Extraktor

Naturstoff-schüttung

$H_2O$

Kompressor

Differenzdruck
(Durchfluß)

Vereinfachtes Verfahrensfließbild